# EUROPEAN PATENT APPLICATION

(11) **EP 1 527 944 A1**
(43) Date of publication of application: **04.05.2005**
(21) Application number: 04022589.8
(22) Date of filing: 22.09.2004
(51) Int. Cl.: B60N 2/24, B60N 2/16

(54) **Backrest assembly for standing ride**

(30) Priority: 29.10.2003 JP 2003368178
(71) Applicant: Kabushiki Kaisha Toyota Jidoshokki, Kariya-shi, Aichi-ken (JP)
(72) Inventor: Takeda, Mitsumasa, Kariya-shi Aichi-ken (JP); Fukatsu, Fumihiro, Kariya-shi Aichi-ken (JP)
(74) Representative: Leson, Thomas Johannes Alois, Dipl.-Ing.

(57) **Abstract**

A structure of a backrest assembly for a standing ride type driver's platform in an industrial vehicle which an operator drives and controls while standing, includes a backrest pad and a backrest height adjustment mechanism. The backrest pad is installed in the driver's platform, and includes a backrest portion for supporting the operator's back and a seat portion that protrudes forward from the backrest portion for supporting the operator's buttocks. The backrest pad is installed in the driver's platform through a backrest height adjustment mechanism.

## Description

### BACKGROUND OF THE INVENTION

The present invention relates to a structure of a backrest assembly for a standing ride type driver's platform in an industrial vehicle such as towing tractor, order picking truck and reach forklift truck.

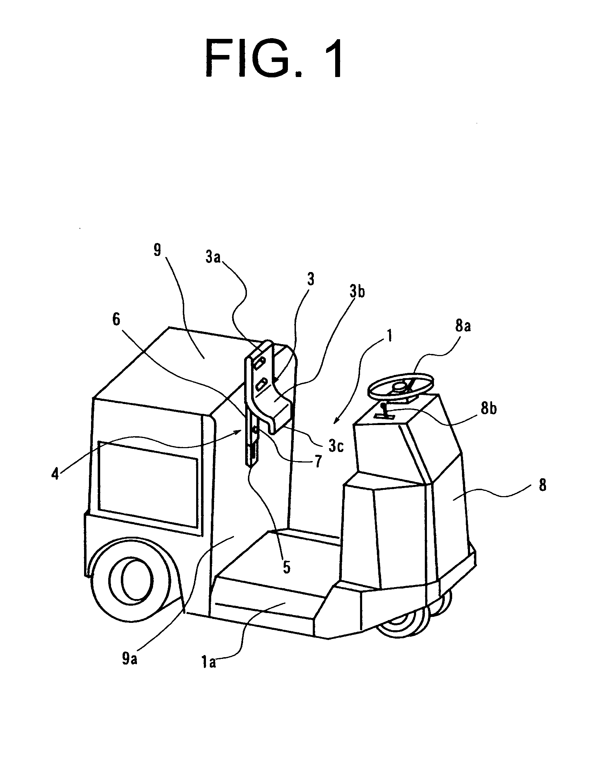

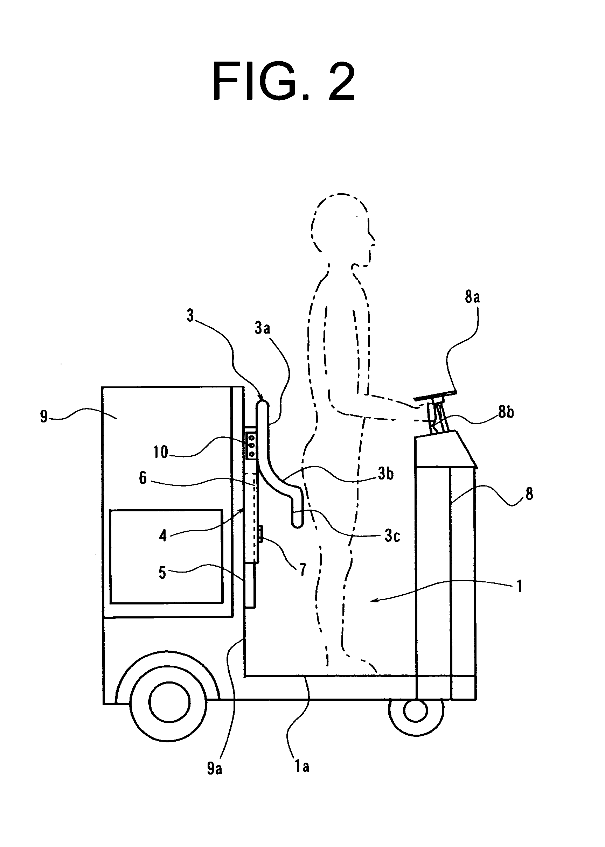

A standing ride type driver's platform in an industrial vehicle, such as towing tractor, order picking truck and reach forklift truck, does not normally provide a sitting type driver's seat for an operator. The operator in the standing ride type driver's platform performs various operations for traveling and lifting and lowering in a standing posture. In order to ensure the stability of the operator's driving posture, some standing ride type driver's platforms provide a pad against which the operator may lean. Since the main object of this pad is to allow the operator to lean his back against it so that he maintains a stable position during his vehicle operation. A flat pad or a curved pad adapted for the above object is disclosed by Japanese Unexamined Patent Publication No. 2001-261293 (shown in FIG. 1) and Japanese Unexamined Utility Model Publication No. 6-53285 (shown in FIGS. 1 and 2).

Although the above-mentioned pad of the standing ride type driver's platform allows the operator to lean against it while operating the vehicle, the operator is required to keep standing in an uneasy position without being seated and subjected to vibration of the vehicle while he manipulates controls for traveling and steering with his both hands and steps on a brake pedal. Obviously, operating the vehicle in a standing position for a long time is a very laborious work, causing fatigue to the operator.

In addition, the above prior art pad is adjustable to suit the operator's height, but the pad is neither tiltable nor designed for seating (except the curved pad). Since the pad is not tiltable, it may not fit the body of operator leaning against the pad. Thus, the operator in the driver's platform may feel uncomfortable when the pad does not fit his body.

### SUMMARY OF THE INVENTION

The present invention is directed to a structure of a backrest assembly for a standing ride type driver's platform which permits an operator to avoid vehicle operation for a long time in a standing posture by allowing him to select his posture in the driver's platform in accordance with his physical condition and the degree of his fatigue. With the backrest assembly according to the present invention, the operator may be seated in the driver's platform, for example, when traveling for a relatively long distance or waiting in the vehicle for a time without traveling, and he may keep standing in the driver's platform, for example, when traveling only for a short distance.

The present invention provides the following features. A structure of a backrest assembly for a standing ride type driver's platform in an industrial vehicle which an operator drives and controls while standing, includes a backrest pad and a backrest height adjustment mechanism. The backrest pad is installed in the driver's platform, and includes a backrest portion for supporting the operator's back and a seat portion that protrudes forward from the backrest portion for supporting the operator's buttocks. The backrest pad is installed in the driver's platform through a backrest height adjustment mechanism.

Other aspects and advantages of the invention will become apparent from the following description, taken in conjunction with the accompanying drawings, illustrating by way of example the principles of the invention.

### BRIEF DESCRIPTION OF THE DRAWINGS

The features of the present invention that are believed to be novel are set forth with particularity in the appended claims. The invention, together with objects and advantages thereof, may best be understood by reference to the following description of the presently preferred embodiments, together with the accompanying drawings, in which:
FIG. 1 is a schematic perspective view illustrating a towing tractor having a structure of a backrest assembly for a standing ride type driver's platform according to first and second embodiments of the present invention;
FIG. 2 is a schematic side view illustrating the towing tractor having the structure of the backrest assembly for the standing ride type driver's platform according to the first and second embodiments of the present invention; and
FIG. 3 is a perspective view illustrating the structure of the backrest assembly for the standing ride type driver's platform according to the first and second embodiments of the present invention.

### DETAILED DESCRIPTION OF THE PREFERRED EMBODIMENTS

A structure of a backrest assembly for a standing ride type driver's platform in an industrial vehicle according to a first preferred embodiment of the present invention will now be described with reference to FIGS. 1 through 3.

Referring to FIG. 1, a towing tractor is shown which has a standing ride type driver's platform 1 in the middle of the vehicle body, a front frame 8 which encloses drive and steering devices in front of the driver's platform 1 and a battery compartment 9 behind the driver's platform 1. The driver's platform 1 has a floor surface 1a and is opened on both sides to provide entry and exit for the operator. As apparent from FIG. 1, the driver's platform 1 has no sitting ride type driver's seat and the operator drives and controls the vehicle while standing in the platform 1.

A backrest pad 3 is mounted to a backrest height adjustment mechanism 4 which is fixed at the center of the front wall 9a of the battery compartment 9 so that a steering wheel 8a and a control lever 8b both provided at the top of the front frame 8 are easily accessible and operable by the vehicle driver, as shown in FIG. 2.

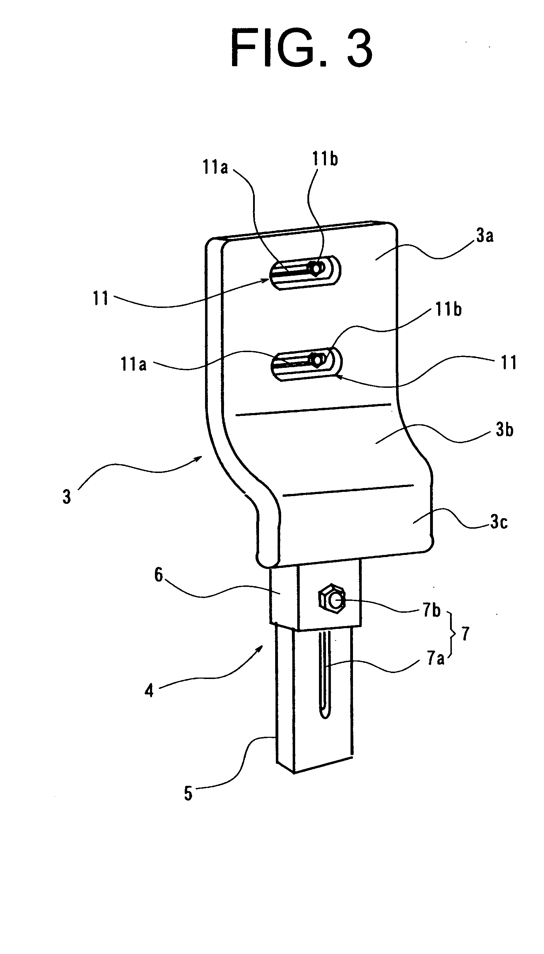

Referring to FIG. 3, the backrest height adjustment mechanism 4 includes a fixture member 5 fixed to the front wall 9a of the battery compartment 9, a movable member 6 and a backrest height adjustment member 7. The fixture member 5 has formed therethrough an adjustment hole 7a in the form of an elongated hole, and a movable member 6 which is adjustably movable relative to the fixture member 5 is fixed to the fixture member 5 at any desired position by means of a fastener 7b inserted through the adjustment hole 7a in the fixture member 5. The adjustment hole 7a may include a plurality of holes. Thus, the height of the backrest pad 3, which is fixed to the movable member 6, is adjusted by moving the movable member 6 relative to the fixture member 5 and the adjustment is fixed by tightening the fastener 7b. It is noted that the adjustment hole 7a and fastener 7b are generically referred to as the backrest height adjustment member 7 which serves as a mechanical connection means for moving the movable member 6 relative to the fixture member 5.

The backrest pad 3 includes a backrest portion 3a which supports the operator's back and a seat portion 3b which is formed integrally with the backrest portion 3a, protruding forward in a streamlined shape from the lower end of the backrest portion 3a for supporting the operator's buttocks. The backrest portion 3a is mounted at the back thereof to the movable member 6 of the backrest height adjustment mechanism 4 through a backward tilting adjustment member 10.

The backrest portion 3a is mounted fixedly or pivotally to the movable member 6 by way of the backward titling adjustment member 10 in such a way that the backrest portion 3a is tiltable rearward by an angle of inclination of, for example, 5 to 10 degrees with respect to the surface of the front wall 9a of the battery compartment 9.

In the above-described structure, the backrest pad 3 is installed in the driver's platform 1 by mounting the back surface of the backrest portion 3a to the movable member 6 of the backrest height adjustment mechanism 4. It is noted, however, that the backrest pad 3 may be installed by mounting its seat portion 3b to the movable member 6.

Referring to FIG. 3, a numeric designation 11 denotes a crosswise movement adjustment member which adjusts the crosswise movement of the backrest pad 3. The crosswise movement adjustment member 11 includes an elongated hole 11a which is formed substantially in the middle of the backrest portion 3a, and a bolt 11 b which protrudes from a support member for the backrest pad 3 such as the movable member 6. The crosswise position of the backrest pad 3a is adjusted by moving the backrest pad 3a in crosswise direction along the elongated hole 11 a and the adjustment is fixed by fastening the bolts 11b.

In the structure of the backrest assembly for the standing ride type driver's platform 1 of the present embodiment, when the operator enters into the driver's platform 1, he firstly loosens the fastener 7b of the backrest height adjustment member 7 to free the movable member 6 from the fixture member 5. Subsequently, the position of the seat portion 3b of the backrest pad 3 is set so as to suit the operator's height by moving the fastener 7b, which is installed in the movable member 6, in the vertical direction along the elongated adjustment hole 7a of the fixture member 5. After the backrest pad 3 is positioned, the movable member 6 is fixed to the fixture member 5 by tightening the fastener 7b. Then, if required, the crosswise and tilt positions of the backrest portion 3a are adjusted so as to suit the operator's height and the standing position for driving in the platform 1 by using the crosswise movement adjustment member 11 and the backward tilting adjustment member 10.

The structure of the backrest assembly for the standing ride type driver's platform of the present embodiment produces the following beneficial effects.
(1) Since the backrest pad 3 is adjustable both vertically and horizontally and also tiltable so as to suit the operator's height and the standing position for driving in the driver's platform, the operator is allowed to appropriately maintain a stable standing position for driving.
(2) Since the backrest pad 3 includes the seat portion 3b formed so as to protrude forward for supporting the operator's buttocks, the operator is allowed to sit down on the seat portion 3b during traveling or temporarily waiting in the driver's platform. Thus, fatigue of the operator due to driving in a standing posture is reduced.
(3) Since the backrest portion 3a and the seat portion 3b of the backrest pad 3 are integrally formed, the backrest pad 3 is made easily and with appropriate strength. Additionally, such integral structure facilitates assembly of the backrest pad 3 to the backrest height adjustment mechanism 4.
(4) The backrest portion 3a and the seat portion 3b of the backrest pad 3 are integrally formed in a streamlined shape, so that not only the design or appearance of the backrest pad 3 is attractive, but also it fits the operator's figure easily, thereby improving the riding comfort.

A structure of a backrest assembly for a standing ride type driver's platform according to a second preferred embodiment of the present invention will now be described with reference to FIG. 3. In the present embodiment, the structure of the backrest assembly for the standing ride type driver's platform according to the first embodiment of the present invention is modified.

Specifically, the structure of the backrest assembly of the second preferred embodiment is modified from the aforementioned backrest pad 3 of the first preferred embodiment in terms of the function and shape. Therefore, for the convenience sake of explanation, the same numeric designations are used to denote like parts or elements. Descriptions common to the first and second embodiments are omitted.

The seat portion 3b of the backrest pad 3 has integrally formed therewith a leg-rest portion 3c extending downward from the front end of the seat portion 3b. The leg-rest portion 3c is formed at such a position that the thigh of the operator driving the vehicle in a standing posture is supported, as required, as shown in FIG. 3. The leg-rest portion 3c should preferably extend downward to a part of the operator's body adjacent to his knee.

In the second preferred embodiment, since the seat portion 3b is formed so as to protrude forward as in the first embodiment, the operator is allowed to sit on the seat portion 3b during traveling or temporarily waiting in the driver's platform. In addition, by moving or leaning against the backrest pad 3 in a standing posture, the operator can have the back of his thigh rested against the leg-rest portion 3c. Thus, the operator can have his thigh supported by the leg-rest portion 3c in standing position, as required, by forcing his thigh onto the leg-rest portion 3c.

Therefore, the operator can maintain his body balance while moving forward or backward during operation of the vehicle in a standing posture, with the result that the operating posture of the operator is further stabilized and the operator's fatigue is reduced.

In addition, the operator can be seated safely without visually checking the position of the seat portion 3b by moving or leaning against the backrest pad 3 until a contact is felt between the back of the thigh and the leg-rest portion 3c and then being seated on the seat portion 3b.

Furthermore, the backrest pad 3 having three parts of different functions, including the backrest portion 3a, the seat portion 3b and the leg-rest portion 3c, formed integrally in a streamlined shape is not only good in design or appearance, but also it fits easily the body of vehicle operator and provides improved riding comfort.

The present invention is not limited to the above-mentioned first and second embodiments, but may be variously modified within the scope of the purpose of the invention, as exemplified below.

In the aforementioned embodiments, the backrest height adjustment member 7 of the backrest height adjustment mechanism 4, which includes the adjustment hole 7a having an elongated shape and the fastener 7b, functions as a mechanical means for permitting the relative movement between the fixture member 5 which is fixedly connected to a member forming a part of the driver's platform 1 and the movable member 6 which is connected to the backrest pad 3. In alternative embodiments to the embodiments, however, a pantograph-jack type mechanism may be used as the backrest height adjustment member 7, which may includes a plurality of link members and screw member for stretching and retracting the link mechanism.

The backrest height adjustment member 7 is not limited to mechanical means, but it may be applied to a fluid pressure means such that the fixture member 5 and the movable member 6 are both connected to a hydraulic or pneumatic damper, to and from which fluid is supplied and discharged for effecting relative movement of the above fixture member 5 and movable member 6.

The backrest pad 3 may be shaped into the form of a bucket seat having a pair of side-legs projecting from the opposite lateral sides thereof so as to wrap around the operator. Thus, the bucket seat type backrest pad further stabilizes the driving posture of the operator.

Although the backrest portion 3a, the seat portion 3b and the leg-rest portion 3c are formed integrally in a streamlined shape to provide the backrest pad 3, the component parts 3a, 3b, 3c of the backrest pad 3 may be fixedly connected together by any suitable means such as brackets.

Therefore, the present examples and embodiments are to be considered as illustrative and not restrictive and the invention is not to be limited to the details given herein but may be modified.

A structure of a backrest assembly for a standing ride type driver's platform in an industrial vehicle which an operator drives and controls while standing, includes a backrest pad and a backrest height adjustment mechanism. The backrest pad is installed in the driver's platform, and includes a backrest portion for supporting the operator's back and a seat portion that protrudes forward from the backrest portion for supporting the operator's buttocks. The backrest pad is installed in the driver's platform through a backrest height adjustment mechanism.

## Claims

1. A structure of a backrest assembly for a standing ride type driver's platform in an industrial vehicle which an operator drives and controls while standing, including a backrest pad installed in the driver's platform, **characterized in that** the backrest pad includes a backrest portion for supporting the operator's back, and a seat portion that protrudes forward from the backrest portion for supporting the operator's buttocks, and **in that** the backrest pad is installed in the driver's platform through a backrest height adjustment mechanism.

2. The structure of the backrest assembly according to claim 1, wherein the backrest pad further comprises a leg-rest portion that extends downward from a front end of the seat portion for supporting the operator's thigh.

3. The structure of the backrest assembly according to claim 1 or 2, wherein the backrest height adjustment mechanism including:
a fixture member fixedly connected to a member forming the driver's platform;
a movable member connected to the backrest pad; and
a backrest height adjustment member that permits relative movement between the fixture member and the movable member.

4. The structure of the backrest assembly according to claim 3, wherein the backrest height adjustment member is a mechanical means.

5. The structure of the backrest assembly according to claim 3, wherein the backrest height adjustment member is a fluid pressure means.
